# EUROPÄISCHE PATENTSCHRIFT

(11) **EP 4 212 745 B1**
(45) Veröffentlichungstag und Bekanntmachung des Hinweises auf die Patenterteilung: **17.04.2024**
(21) Anmeldenummer: 22209782.6
(22) Anmeldetag: 28.11.2022
(51) Int. Cl.: F16C 11/06, F16C 11/08

(54) **GELENKIGER STELLFUSS MIT AUFLAGETELLER**
ARTICULATED POSITIONING FOOT WITH SUPPORT PLATE
PIED DE RÉGLAGE ARTICULÉ DOTÉ D'UNE PLAQUE DE SUPPORT

(30) Priorität: 17.01.2022 DE 102022100897
(43) Veröffentlichungstag der Anmeldung: 19.07.2023
(73) Patentinhaber: Otto Ganter GmbH & Co. KG Normteilefabrik, 78120 Furtwangen (DE)
(72) Erfinder: HOFMANN, Thilo, 78120 Furtwangen (DE)
(74) Vertreter: Riebling, Peter

(56) Entgegenhaltungen:
- DE-A1- 4 226 986
- DE-A1-102017 104 179
- DE-U1- 29 714 531
- DE-U1-202013 006 889

## Beschreibung

Gegenstand der Erfindung ist ein gelenkiger Stellfuß mit einem Auflageteller nach dem Oberbegriff des Patentanspruches 1.

Stellfüße sorgen für einen sicheren Stand von Konstruktionen wie z. B. von Möbeln oder Anlagen im Maschinenbau. Sie bestehen meist aus einem Gewindeschaft aus Metall sowie einem tellerförmigen Fuß aus Kunststoff oder ebenfalls aus Metall. Mit Hilfe des Gewindes kann die Höhe des Stellfußes angepasst werden; dadurch kann die darüber befindliche Konstruktion nivelliert und an Höhendifferenzen des Untergrunds angepasst werden. Oft ist der Schaft mittels Kugelgelenk im Fußteller bzw. Auflageteller gelagert. So kann der Auflageteller schräg gestellt werden und damit auch Unebenheiten (fehlende Parallelität) des Untergrunds ausgleichen. Stoßabsorbierende Stellfüße enthalten zur Vibrationsdämpfung ein elastisches Bauteil, beispielsweise aus einem Elastomer.

Zur Bildung des Kugelgelenks weist der Auflageteller eine teilkugelförmige Aufnahme in dem Elastomer für eine Kugel auf, die am Ende des Schafts angebracht ist. Durch das Gelenk können vorhandene Boden- und Oberflächenunebenheiten ausgeglichen werden, auf denen die Standfläche des Auflagetellers zur Auflage kommt.

Auch kann ein Stellfuß verwendet werden, um über den Auflageteller einen Druck auf eine Oberfläche auszuüben, beispielweise um eine drehende Kabeltrommel abzubremsen.

Der Nachteil bei den bekannten Stellfüßen besteht jedoch darin, dass das Elastomer lediglich eine formschlüssige Verbindung mit der Kugel und somit dem stabilisierenden Element eingeht, weil die Kugel lediglich in das Elastomer eingesteckt ist. Durch seitliche auf den Auflageteller wirkende Kräfte kann sich der Teller von der Kugel jedoch unbeabsichtigt lösen.

Am Rand der nach oben offenen Kugelaufnahme der Kugel ist ein Spalt, indem sich Fette und Schmutzrückstände festsetzen können, die zu Verunreinigungen, Bakterien und Keimbildung führen. Dies kann in gewissen Branchen, insbesondere in der Lebensmittel- und Pharmaindustrie, zu Hygieneproblemen führen. Zur Vermeidung sind bisher beispielsweise Abdeckungen bekannt, wie sie beispielsweise in der DE 297 14 531U1 offenbart sind. DE 42 26 986 A1 offenbart einen gelenkigen Stellfuß nach dem Oberbegriff des Anspruchs 1.

Die DE 297 14 531U1 zeigt einen gelenkigen Stellfuß umfassend einen Auflageteller mit einer Standfläche zur Auflage auf einer Oberfläche sowie einer teilkugelförmigen Aufnahme für eine Kugel, die am Ende einer Gewindespindel angebracht ist, wobei die Aufnahme durch einen Hohlraum in einem Elastomer gebildet ist, das sich innerhalb des Auflagetellers befindet.

Derartige Stellfüße haben das Problem, dass das verbaute Elastomer zu weich ist und nur für statische und geradlinig von oben wirkenden Kräften ausgelegt ist. Sobald seitliche Verschiebekräfte wirken, wie z.B. bei einer Kabelbremse zur Ausübung von Bremsdruck, kann sich die Kugel aus der Kugelaufnahme lösen.

Der Erfindung liegt daher die Aufgabe zugrunde, einen Auflageteller mit einem Kugelgelenk der eingangs genannter Art derart auszubilden, dass eine kontrollierte Kraftübertragung von dem Schaft auf den Auflageteller ausgeübt werden kann.

Die Aufgabe wird erfindungsgemäß durch die Merkmale des unabhängigen Patentanspruches gelöst, während vorteilhafte Ausgestaltungen und Weiterbildungen der Erfindung den Unteransprüchen entnommen werden können.

Vorteilhaftes Merkmal ist, dass die Kugelaufnahme unterhalb der Kugel durch eine Verstärkungsscheibe begrenzt ist, die im Elastomer stoff- und formschlüssig eingebettet ist und ein zentrales Loch aufweist, in dem sich die Unterseite der Kugel abstützt.

Die Verstärkungsscheibe ist bevorzugt aus Metall oder einer Metalllegierung gefertigt, bevorzugt aus nichtrostendem Edelstahl. Die Stärke der Scheibe ist so gewählt, dass sie die zu erwartenden Kräfte aufnehmen kann, ohne dass eine Verformung auftritt. Als Beispiel kann ein dünnes Millimeterblech von z.B. 3,2mm genannt werden, wobei auf einen Schaft mit einem M12-Gewinde Kräfte zwischen 200 und 300 kg wirken können.

Die Höhe des Auflagetellers kann beispielsweise zwischen 6,5 und 10, 5mm liegen, wobei der Durchmesser 14-32mm einnehmen kann. Für die Verstärkungsscheibe können Dicken zwischen 1 und 3,2mm gegeben sein. Der Bodenbereich kann eine Höhe zwischen 0,9 und 1,7mm aufweisen und die Kugel einen Durchmesser von 4,5 bis 9,4mm. Alle Angaben sind beispielhaft zu verstehen und stellen keine Einschränkung der vorliegenden Erfindung dar.

Die Verstärkungsscheibe ist durch Vulkanisation mit dem Elastomer verbunden. Elastomere sind formfeste, aber elastisch verformbare Kunststoffe, deren Glasübergangspunkt sich unterhalb der Einsatztemperatur befindet. Die Kunststoffe können sich bei Zug- und Druckbelastung elastisch verformen, finden aber danach in ihre ursprüngliche, unverformte Gestalt zurück.

Zur Anwendung kommen diverse vulkanisierte Elastomere mit unterschiedlichsten Materialanforderungen und Rohgummisorten für die jeweiligen Anwendungen und nach individuellen Vorgaben. Je nach Materialpaarung und Bedarf werden die Verstärkungsscheibe und das Elastomer als Gummimetallverbindungen mit als auch ohne Haftvermittler hergestellt.

Bevorzugt wird als Material ein thermoplastisches Elastomer, Acrylnitril-Butadien-Kautschuk (NBR) oder Naturkautschuk verwendet. Auch möglich ist SilikonKautschuk MVQ oder Polyurethan TPU.

In einer weiteren Ausführungsform wird die Verstärkungsscheibe mit einem Spritzgussverfahren in einem elastischen Kunststoff eingebettet.

Unter der Verstärkungsscheibe befindet sich ein Bodenbereich. Der Bodenbereich ist ein Teilbereich des Elastomers oder Kunststoffes, je nach Ausführungsform, welcher durch die Verstärkungsscheibe zumindest teilweise von dem Haupt-Elastomers oder Kunststoffes abgetrennt ist. Dieser Bodenbereich bildet somit eine elastische Auflage für die Verstärkungsscheibe, damit diese keinen direkten Kontakt mit der Oberfläche hat, auf die der Auflageteller aufliegt.

In einer vorteilhaften Weiterbildung besitz dieser Bodenbereich eine gegenüber dem restlichen elastischen Körper unterschiedliche SHORE-Härte. So kann der obere Bereich weicher sein, damit die Kugel besser gleitet und der Bodenbereich härter, damit der Druck besser auf eine Oberfläche, auf die der Auflageteller ansteht, übertragen werden kann. Dies kann der Verschleißfestigkeit dienen. Auch kann somit Einfluss auf das Vibrationsverhalten des Auflagetellers genommen werden.

Dies ist u.a. durch die Verwendung eines 2-Komponeten-Elastomers möglich, welche im Spritzverfahren verarbeitet wird. Damit kann das Elastomer oberhalb der Verstärkungsscheibe härter sein, als das zweite Elastomer unterhalb der Verstärkungsscheibe. Wesentlich dabei ist jedoch, dass ein geeigenter Stoffschloss mit der Verstärkungsscheibe möglich ist.

Auch kann durch die Verwendung verschiedenartiger Elastomere ein Farbunterschied erzeugt werden, um beispielsweise das Bodenseitige Elastomer blau auszubilden.

In einer weiteren Ausführungsformen der Erfindung ist das Elastomer von einem Metallmantel umgeben, der beispielsweise nach oben hin einer Aussparung für die Durchführung des Schaftes aufweist und nach unten vollständig geöffnet. Der Metallmantel dient zum Schutz des Elesatomers.

Die Verstärkungsscheibe ist ringförmig und hat in axialer Mitte ein Loch mit trichterförmiger Wandung. Die lichte Weite des Lochs ist kleiner als der Durchmesser der Kugel, wobei sich die Kugelunterseite kraftbeaufschlagt auf der Wandung abstützt. Eine Ringform kommt bevorzugt bei runden Auflagestücken oder entsprechend der Form des Auflagestücks zur Anwendung. Alternativ kann auch eine quadratische, oval, elliptische, trapez- oder rautenförmige Formgebung der Verstärkungsscheibe zur Anwendung kommen.

Im Folgenden wird der Einfachheit halber von einer Ringform ausgegangen, wobei dies nicht beschränkt hinsichtlich der Formgebung zu verstehen ist.

Eine Rastöffnung im Elastomer ist auf der der Standfläche entgegengesetzten Seite des Auflagetellers gebildet. Sie besteht aus einer umlaufenden Fase, die trichterförmig in einen Kragen übergeht, dessen lichte Weite (W) geringer ist als der Kugeldurchmesser (D). Der Kragen bildet eine umlaufende Spreizfläche zur Ausweitung der Rastöffnung bis auf einen den Äquator der Kugel überschnappenden Durchmesser. Somit wird eine Steckrastverbindung für die Kugel in der Kugelaufnahme gebildet.

Damit sich der Schaft nicht lösen kann, springt nach der Einführung der Kugel in das Elastomer dieses wieder zurück, wobei sich der Durchmesser verengt und der elastomere Kragen hält den Hals des Schafts formschlüssig und bevorzugt abgedichtet. Die Bemaßung des Kragens ist so gewählt, dass das Elastomer die Kugel immer mit Spannung in die Kugelaufnahme zieht und somit die Kugel in der Aufnahme eingeschnappt gehalten wird.

Das Elastomer ist somit elastisch aufweitbar und bietet aufgrund seiner Elastizität eine Rückstellung. Weiterer Vorteil ist, dass das Gelenk möglichst vollständig vor Verschmutzungen wie Staub oder Flüssigkeiten geschützt ist. Dabei ist die Kugel in dem Loch gleitend und elastisch formschlüssig gelagert. Somit wird auch das Eindringen von Fremdstoffen effektiv verhindert.

Auch ist die teilkugelförmige Kugelaufnahme an die Außenkontur der Kugel angepasst, um so das Eindringen von Verschmutzungen, Ablagerungen und Keimbildung zu verhindern.

Die Kugel ist mit einem aus dem Schaft ragendem Hals materialeinheitlich verbunden. Durch das Gewinde kann ein Druckstück oder ein Stellfuß zur Positionseinstellung, Abstützung von Geräten oder Lastübertragung geschaffen werden.

Bevorzugt wird die Kugel mit einem Schaft, wobei es sich beispielsweise um eine Gewindespinde handelt oder in einer weiteren Ausführungsform um eine glatten oder profilierten Stange.

Die Kugel lässt sich in jeder Ausführungsform einfach in den Auflageteller eindrücken und bei Bedarf wieder demontieren.

Hierbei ist der Begriff "Kugel" nicht beschränkend zu verstehen, auch ein kugelig ausgeformter Zapfen oder ein konisch zulaufender Zapfen mit einer Hinterschneidung im Bereich des Halses des Elastomerkörpers ist mit der vorliegenden Erfindung umfasst.

Erfindungsgemäß befindet sich somit im Auflageteller ein Elastomerelement, dass durch eine metallische Scheibe verstärkt oder armiert bzw. bewehrt ist. Die Verstärkungsscheibe wird mit dem Elastomerelement stoffschlüssig verbunden, bevorzugt durch Vulkanisation.

Der Schaft wird in die Rastöffnung eingeführt, rastet in dem Elastomerelement ein und kommt auf der Verstärkungsscheibe zur Auflage. Somit wird die Kraft, die auf den Schaft wirkt, in die Verstärkungsscheibe eingeleitet und von dem Elastomer aufgenommen, insbesondere von einem Bodenbereich unterhalb der Verstärkungsscheibe.

Die Senkung des Lochs ist so gewählt, dass sie an dem Kugelkopf eine tangentiale Auflage erzeugt. Kräfte werden von oben über den Schaft eingeleitet, welche über den Kugelkopf an die Verstärkungsscheibe weitergeleitet werden und somit flächenmäßig in das Elastomer eingeleitet werden, ohne dieses punktuell zu überlasten. Somit verteilt sich die Last über die gesamte Auflagefläche.

Der Auflageteller wirkt dämpfend, geräuschreduzierend und schützt Oberflächen vor Beschädigungen. Letztes, insbesondere durch eine optionale Gummierung auf der Standfläche. Somit ist der Auflageteller auch rutschfest gegenüber einer seitlichen Bewegung. Zudem hat die Gummierung eine schonende Eigenschaft gegenüber Auflagefläche.

Der Stellfuß kann in beliebigen Ausrichtungen, wie z.B. horizontal oder vertikal Anwendung finden. Zudem ist eine Verwendung als Druckstück vorgesehen, wobei ein über den Stellfuß übertragener Druck auf eine Oberfläche wirkt. Eine solche Oberfläche kann beispielsweise die Bremsfläche einer Kabeltrommel sein, wobei bei Druck der Standfläche des Auflagetellers gegen die Bremsfläche die Kabeltrommel abgebremst wird.

Der erfindungsgemäße gelenkige Stellfuß mit einem Auflageteller ist nicht beschränken auf die Aufstellung auf einen Untergrund zu verstehen. Die erfindungsgemäße Vorrichtung kann auch für die folgenden, beispielhaft aufgeführten Verwendungen genutz werden:
- als Bremsstück, z.B. wenn der Auflageteller auf eine Bremsscheibe drückt und somit durch Reibung die Scheibe abbremst
- als Druckstück, z.B. wenn der Auflageteller mindestens einseitig mit einem Spannzylinder gekoppelt ist
- zur Einleitung von Kraft in ein Bauteil
- zur Schonung oder Schutz einer Aufstandsfläche durch die Verwendung eines Elastomers

Das Verfahren zur Einbettung der Verstärkungsscheibe in den Auflageteller weist die folgenden Merkmale auf:
Die Scheibe weist eine den Stoffschluss fördernde Vorbehandlung an der später umschlossenen Oberfläche auf. Das Loch dient bei der Herstellung des Stellfußes zur Handhabung und zur Positionierung der Verstärkungsscheibe im Werkzeugt, da hier die Scheibe auf Abstand zur Wandung der Spitzgießform mit einem Halter gehalten wird. Dann findet zunächst eine Einspritzung und Umspritzung, z. B. per Kompression-, Transfer- Injektionsumspritzung mit dem Elastomergrundstoff statt

Anschließend findet die Vulkanisierung statt, wobei die Verstärkungsscheibe durch den Eingriff eines Halters in dem Loch gehalten wird.

Das Elastomer verbindet sich mit der Verstärkungsscheibe stoffschlüssig.

Die Verstärkungsscheibe ist in dem Elastomer eingebettet und zwischen Standfläche und Unterseite der Scheibe ist ein Bodenbereich gebildet, der federnde und dämpfende Eigenschaften hat.

Als Resultat des Herstellungsverfahrens bleibt in der Standfläche ein bodenseitiger Freiraum offen, der zur optischen Kontrolle des richtigen Einrastzustandes der Kugel genutzt werden kann.

In einer weiteren Ausführungsform weist die Verstärkungsscheibe an ihrem Außenumfang nach oben oder unten gebogene Ränder auf, welche eine zusätzliche Stützwirkung erzeugen bei einer auf die Scheibe wirkende Kraft, welche nicht senkrecht von oben wirkt. Somit können die durch eine, schrägstehende, Schaft eingeleiteten Kräfte besser in das Elastomer geleitet werden.

Der Stellfuß kann beispielsweise an einem Gerät befestigt sein oder als feste Installation aus einem Boden- oder Wandbereich ragen.

Somit kann durch den erfindungsgemäßen, gelenkigen Stellfuß mit einem Auflageteller eine Kraft aufgenommen oder übertragen werden, wobei die Überleitung der Kraft zwischen Auflageteller und Schaft, bedingt durch die Kopplung des kugelförmigen Ende des Schafts mit der Verstärkungsscheibe innerhalb des Elastomers des Auflagetellers, verbessert ist, unabhängig von der Ausrichtung des Schafts relativ zur Symmetrieachse des Auflagetellers.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: eine vordere Ansicht des teilweise geschnittenen Stellfußes
- Figur 2:: eine vordere Ansicht des teilweise geschnittenen Auflagetellers
- Figur 3:: eine vordere Ansicht eines Schaftes und eines Auflagetellers
- Figur 4:: eine Draufsicht des Stellfußes
- Figur 5:: eine vordere Ansicht des teilweise geschnittenen Stellfußes
- Figur 6:: eine vordere Ansicht des teilweise geschnittenen Stellfußes mit ausgelenktem Schaft
- Figur 7a-7b:: verschiedene perspektivische Ansichten von Stellfüßen mit unterschiedlich geformten Auflagetellern

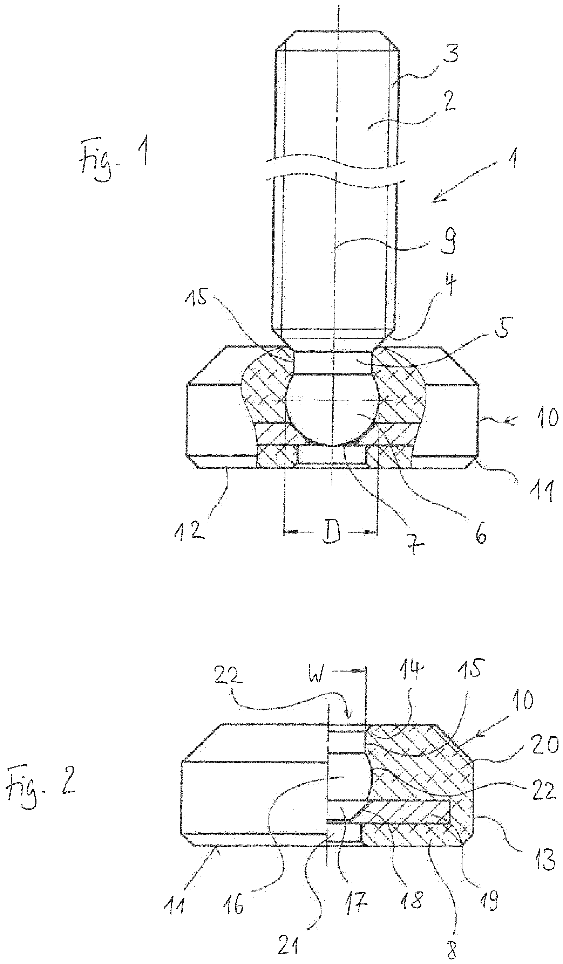

Figur 1 zeigt einen Stellfuß 1, der einen Schaft 2 mit einem Gewinde 3 umfasst, das als Außengewinde ausgebildet ist. Unterhalb des Gewindes 3 schließt sich eine Fase 4 an, die den Durchmesser des Schafts verringert und in einen Hals 5 übergeht, welcher den Bereich mit dem geringsten Durchmesser des Schafts 2 bildet. An diesen Hals schließt sich in Längsrichtung eine Kugel 6 an, die einen werkstoffeinstückigen Teil des Schafts 2 bildet.

Die Kugel 6, der Hals 5 und zumindest ein Teil der Fase 4 ist in dem Auflageteller 10 eingesteckt, der unterhalb des Gewindes 3 angeordnet ist.

Eine Rastöffnung ist auf der, der Standfläche 11 entgegengesetzten Seite des Auflagetellers gebildet durch die umlaufende Fase 14, die trichterförmig in einen Kragen 15 übergeht, dessen lichte Weite (W) geringer ist als der Kugeldurchmesser (D).

Dabei ist die Kugel 6 formschlüssig in der Kugelaufnahme 16 des Auflagetellers 10 gehalten, welche durch einen mittigen Freiraum des Elastomers 20 gebildet wird.

Das Elastomer 20 weist oberhalb der Kugelaufnahme 16 den Kragen 15 auf, der sich an dem Hals 5 ringförmig anlegt.

Oberhalb des Kragens 15 erweitert sich die durch den Kragen 15 gebildete Öffnung radial durch die umlaufende Fase 14, welche sich zumindest teilweise an die Fase 4 des Schafts anlegt.

Die Kugelaufnahme 16 ist in Richtung der Standfläche 11 des Auflagetellers 10 von der Verstärkungsscheibe 19 begrenzt, die in dem Elastomer 20 eingebettet ist. Die Verstärkungsscheibe 19 weist ein mittiges Loch 17 auf, in dem die Kugelunterseite 7 drehbar gelagert ist. Das Loch 17 verfügt über eine Wandung 18, die den Innenumfang bildet und eine zur Umfangfläche der Kugel 6 komplementäre Form aufweist. Somit wird das Drehen der Kugel 6 innerhalb des Lochs 17, bei gleichbleibendem Kontakt zwischen Kugel 6 und Wandung 18, erleichtert.

Ein solches Drehen wird durch ein Verschwenken des Schafts 2 erreicht, desses Mittelachse 9, ausgehend von dem durch die Kugel 6 und das Loch 17 gebildeten Drehgelenkt, in einem veränderbaren Winkel relativ gegenüber dem Auflageteller 10 verschwenkt wird. Dies wird jedoch durch die Härte des Elastomers 20 begrenzt, welches je nach Steigerung der Auslenkung der Mittelachse 9 des Schafts 2 einen steigenden Widerstand entgegenwirkt. Lässt die auf den Schaft wirkende Kraft nach, kehrt der Schaft aufgrund der Elastizität des Elastomers wieder in ihren Ausgangszustand zurück, der im gezeigten Zustand eine senkrecht zur Standfläche 11 ausgerichtete Lage ist.

Figur 2 zeigt einen Auflageteller 10 ohne eingesteckte Kugel, wobei die Innengeometrie des Aufnahmeraumes 16 zu erkennen ist. Dieser entspricht in etwa der Rundung der Kugel 6 und ist nach unten hin von der Verstärkungsscheibe 19 begrenzt.

In axialer Richtung verjüngt sich zunächst die Fase 14 und geht in den Kragen 15 über, der zylinderförmig ausgebildet ist. Unterhalb des Kragens 15 beginnt die Kugelaufnahme 16, in dem sich der Hohlraum unterhalb des Kragens zunächst radial vergrößert mit einer ersten Anlagefläche 22, welche ca. 113 der Kugelaufnahme umfasst. Die Anlagefläche 22 trifft auf eine zweite Anlagefläche 23, welche zylindrisch ausgebildet ist und sich über ca. 213 der Kugelaufnahme 16 erstreckt, bis sie auf der Verstärkungsscheibe 19 endet. Somit kann bei einer möglichst kostengünstigen Produktion des Elastomeres bei vergleichsweise geringen Werkzeugformkosten eine sehr gute Ein- und Ausführung der Kugel 6 realisiert werden.

Die Verstärkungsscheibe weist das zentrale Loch 17 auf, mit der sich in Richtung der Standfläche 11 verjüngenden, kreisförmigen Wandung 18.

Unterhalb des Lochs 7 befindet sich der Freiraum 21, der fertigungsbedingt vorhanden ist. Dieser Freiraum 21 kann durch eine über die komplette Standfläche 11 verlaufende Gummierung verdeckt werden.

Der Freiraum 21 befindet sich innerhalb des Bodenbereichs 8, der sich unterhalb der Verstärkungsscheibe 19 befindet. Der Bodenbereich 8 ist ein Teilbereich des Elastomers 20, welcher durch die Verstärkungsscheibe 19 zumindest teilweise von dem Haupt-Elastomers 20 abgetrennt ist. Dieser Bodenbereich bildet somit eine elastomere Auflage für die Verstärkungsscheibe 19, damit diese keinen direkten Kontakt mit der Oberfläche hat, auf die der Auflageteller aufliegt. Dieser Bodenbereich 8 wirkt den mittels des Schafts 2 in den Auflageteller 10 eingeleiteten Kräften dämpfend und federnd entgegen.

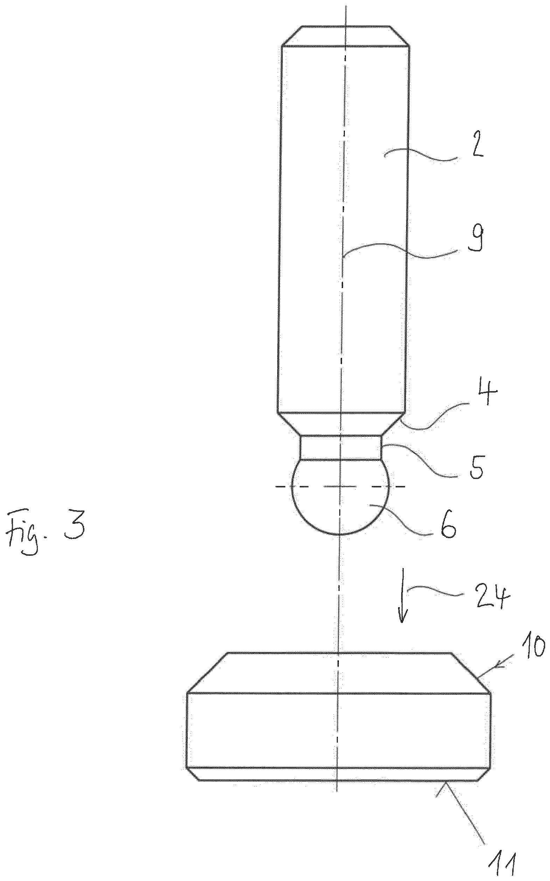

Figur 3 zeigt einen Stellfuß 1 mit dem Schaft 2. Der Schaft weist im Bereich des Auflagetellers 10 eine Fase 4 auf, die den Durchmesser des Schafts verringert und in einen Hals 5 übergeht, welcher den Bereich mit dem geringsten Durchmesser des Schafts 2 bildet. An diesen Hals schließt sich in Längsrichtung die Kugel 6 an, die einen werkstoffeinstückigen Teil des Schafts 2 bildet.

Die Kugel 6, der Hals 5 und zumindest ein Teil der Fase 4 wird in Pfeilrichtung 24 in den Auflageteller 10 eingesteckt, der mit der Standfläche 11 auf einer (nicht gezeigten) Oberfläche aufsteht.

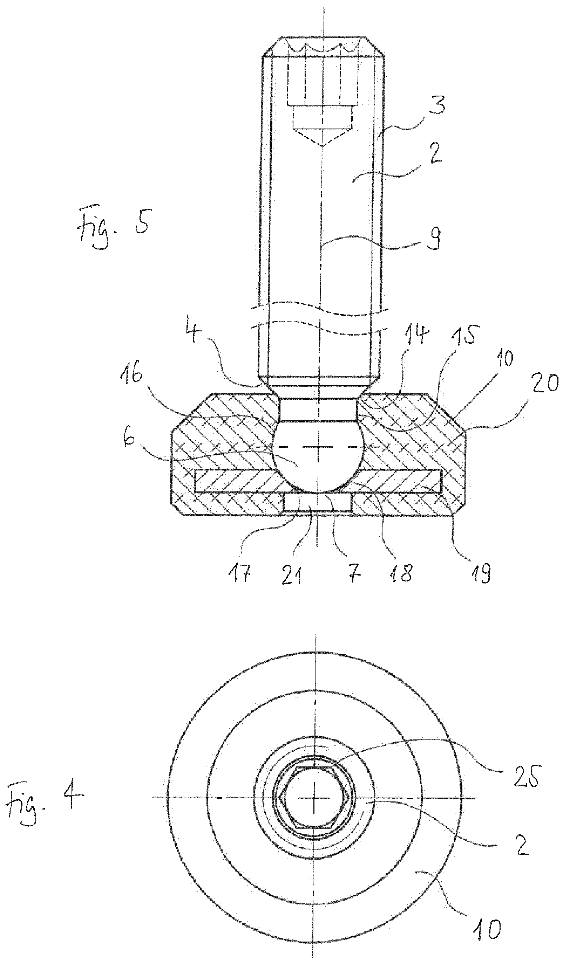

Figur 4 zeigt eine Draufsicht auf einen mittig zum Auflageteller (10) eingesteckten Schaft 2, der bspw. über eine Innenvielkant- oder Innenvielrundaufaufnahme 25 für ein Werkzeugt verfügt. Damit kann über einen Werkzeugangriff, der auch an beliebig anderer Geometrie erfolgen kann, der Schaft um seine Mittelachse 9 gedreht werden.

Figur 5 zeigt einen in einen Auflageteller 10 eingesteckten Schaft 2. Eine Rastöffnung ist auf der, der Standfläche 11 entgegengesetzten Seite des Auflagetellers 10 gebildet durch die umlaufende Fase 14, die trichterförmig in einen Kragen 15 übergeht, dessen lichte Weite (W) geringer ist als der Kugeldurchmesser (D).

Dabei ist die Kugel 6 formschlüssig in der Kugelaufnahme 16 des Auflagetellers 10 gehalten, welche durch einen mittigen Freiraum des Elastomers 20 gebildet wird.

Der Kragen 15, der sich oberhalb der Kugelaufnahme 16 befindet, legt sich nach Einführung der Kugel 6 um den Hals 5 ringförmig an.

Oberhalb des Kragens 15 erweitert sich die durch den Kragen 15 gebildete Öffnung radial durch die umlaufende Fase 14, welche sich zumindest teilweise an die Fase 4 des Schafts anlegt.

Die Kugelaufnahme 16 ist in Richtung der Standfläche 11 des Auflagetellers 10 von der Verstärkungsscheibe 19 begrenzt, die in dem Elastomer 20 eingebettet ist. Die Verstärkungsscheibe 19 weist ein mittiges Loch 17 auf, in dem die Kugelunterseite 7 drehbar gelagert ist. Das Loch 17 verfügt über eine Wandung 18, die den Innenumfang bildet und eine zur Umfangfläche der Kugel 6 komplementäre Form aufweist. Somit wird das Drehen der Kugel 6 innerhalb des Lochs 17, bei gleichbleibendem Kontakt zwischen Kugel 6 und Wandung 18, erleichtert.

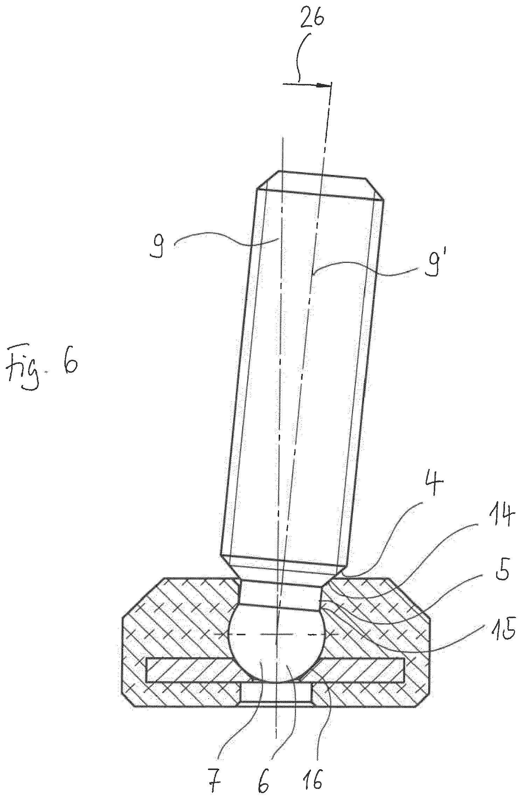

Ein solches Drehen wird durch ein Verschwenken des Schafts 2 erreicht, dessen Mittelachse 9, ausgehend von dem durch die Kugel 6 und das Loch 17 gebildeten Drehgelenkt, in einem veränderbaren Winkel relativ gegenüber dem Auflageteller 10 verschwenkt wird. Dies ist in Figur 6 dargestellt, wobei die ursprüngliche Mittelachse 9 durch die Auslenkung 26 in die Mittelachse 9' übergeht, welche nicht mehr deckungsgleich mit der Symmetrieachse des Auflagetellers 10 ist.

Dies wird jedoch durch die Härte des Elastomers 20 begrenzt, welches je nach Steigerung der Auslenkung der Mittelachse 9 des Schafts 2 einen steigenden Widerstand entgegenwirkt. Lässt die auf den Schaft wirkende Kraft nach, kehrt der Schaft aufgrund der Elastizität des Elastomers wieder in ihren Ausgangszustand zurück, der im gezeigten Zustand nach Figur 4 eine senkrecht zur Standfläche 11 ausgerichtete Lage ist.

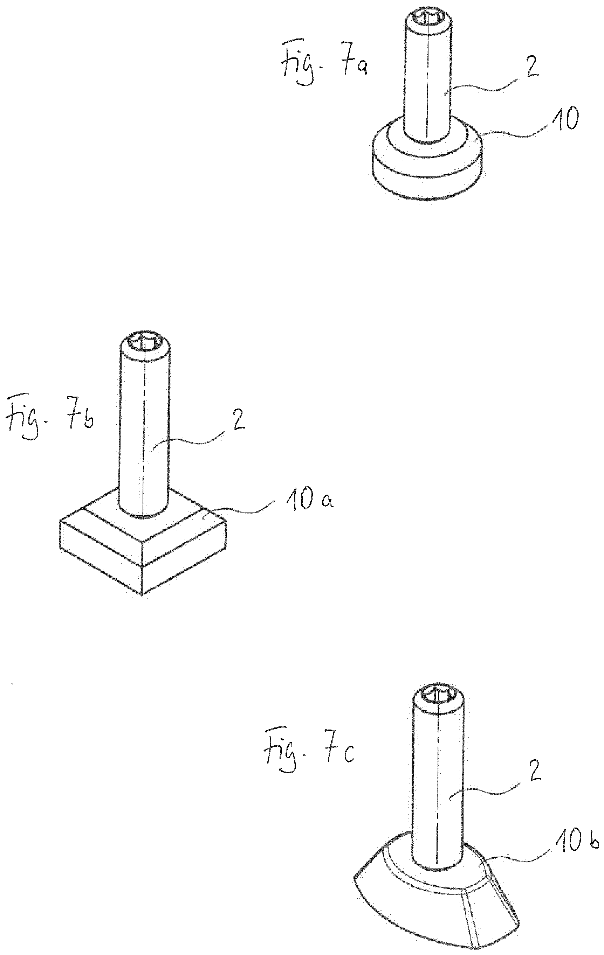

Die Figuren 7a-7c zeigen beispielhaft verschiedene Formgebungen von Auflagetellern, wobei 7a einen runden Auflageteller 10, Figur 7b einen eckigen Auflageteller 10a und Figur 7c einen annähernd ovalen Auflageteller 10b zeigt.

### Zeichnungstegende

- 1: Stellfuß
- 2: Schaft
- 3: Gewinde
- 4: Fase
- 5: Hals
- 6: Kugel
- 7: Kugelunterseite
- 8: Bodenbereich
- 9, 9': Mittelachse
- 10, 10a, 10b: Auflageteller
- 11: Standfläche
- 12: Gummierung
- 13: Hülle
- 14: Fase
- 15: Kragen
- 16: Kugelaufnahme
- 17: Loch
- 18: Wandung
- 19: Verstärkungsscheibe
- 20: Elastomer
- 21: Freiraum
- 22: erste Anlagefläche
- 23: zweite Anlagefläche
- 24: Pfeilrichtung
- 25: Innenvielkantaufnahme
- 26: Auslenkung

- D: Durchmesser der Kugel
- W: lichte Weite der Kragens

## Patentansprüche

1. Gelenkiger Stellfuß (1) umfassend einen wenigstens teilweise elastomer ausgebildeten Auflageteller (10) mit einer Standfläche (11) zur Auflage auf einer Abstützfläche, sowie einer einseitig offenen Kugelaufnahme (16) für eine Kugel (6), die am Ende eines Schafts (2) angebracht ist, wobei, die Kugelaufnahme (16) unterhalb der Kugel (6) durch eine Verstärkungsscheibe (19) begrenzt ist, **dadurch gekennzeichnet, dass** die Verstärkungsscheibe (19) im Elastomer (20) eingebettet ist und ein zentrales Loch (17) aufweist, in dem sich die Unterseite (7) der Kugel (6) abstützt.

2. Stellfuß (1) nach Anspruch 1, **dadurch gekennzeichnet, dass** die Kugel (6) in dem Loch (17) schwenkbar gelagert ist.

3. Stellfuß (1) nach Anspruch 1 oder 2, **dadurch gekennzeichnet, dass** sich der Umfangsbereich des Lochs (17) in der Verstärkungsscheibe (16) formschlüssig an den dort eingreifenden Kugeldurchmesser anlegt.

4. Stellfuß (1) nach einem der Ansprüche 1 bis 3, **dadurch gekennzeichnet, dass** die Verstärkungsscheibe (19) aus Metall ist.

5. Stellfuß (1) nach einem der Ansprüche 1 bis 4, **dadurch gekennzeichnet, dass** die Verstärkungsscheibe (19) durch Vulkanisation mit dem Elastomer (20) verbunden ist.

6. Stellfuß (1) nach einem der Ansprüche 1 bis 5, **dadurch gekennzeichnet, dass** die Kugel (6) mit einem aus dem Schaft (2) ragenden, gegenüber dem Kugeldurchmesser im Durchmesser verjüngten Hals (5) materialeinheitlich verbunden ist.

7. Stellfuß (1) nach einem der Ansprüche 1 bis 6, **dadurch gekennzeichnet, dass** eine Rastöffnung (22) auf der der Standfläche (11) entgegengesetzten Seite des Auflagetellers (10) gebildet ist durch eine umlaufende Fase (14), die trichterförmig in einen Kragen (15) übergeht, dessen lichte Weite (W) geringer ist als der Kugeldurchmesser (D).

8. Stellfuß (1) nach einem der Ansprüche 1 bis 7, **dadurch gekennzeichnet, dass** die Kugel (6) und die Kugelaufnahme (16) im Stellfuß (1) eine elastomere Steckrastverbindung ausbilden.

9. Stellfuß (1) nach einem der Ansprüche 1 bis 8, **dadurch gekennzeichnet, dass** der Kragen (15) eine umlaufende Spreizfläche zur Ausweitung der Rastöffnung (22) bis auf einen den Äquator der Kugel (6) überschnappenden Durchmesser. bildet.

10. Stellfuß (1) nach einem der Ansprüche 1 bis 9, **dadurch gekennzeichnet, dass** zwischen Verstärkungsscheibe (19) und Standfläche (11) das Elastomer (20) einen elastomeren Bodenbereich (8) ausbildet.

## Claims

1. Articulated adjustable foot (1) comprising a bearing plate (10) formed to be at least partly elastomeric and having a mounting surface (11) for resting on a supporting surface, and a ball receiver (16) open on one side for a ball (6) which is attached at the end of a shaft (2), wherein the ball receiver (16) is limited beneath the ball (6) by a reinforcing disc (19), **characterised in that** the reinforcing disc (19) is embedded in the elastomer (20) and has a central hole (17) in which the underside (7) of the ball (6) is supported.

2. Adjustable foot (1) according to claim 1, **characterised in that** the ball (6) is mounted to be pivotable in the hole (17).

3. Adjustable foot (1) according to claim 1 or 2, **characterised in that** the circumferential region of the hole (17) in the reinforcing disc (16) rests positively on the ball diameter engaging there.

4. Adjustable foot (1) according to one of claims 1 to 3, **characterised in that** the reinforcing disc (19) is made of metal.

5. Adjustable foot (1) according to one of claims 1 to 4, **characterised in that** the reinforcing disc (19) is joined to the elastomer (20) by vulcanisation.

6. Adjustable foot (1) according to one of claims 1 to 5, **characterised in that** the ball (6) is joined with uniform material to a neck (5) projecting from the shaft (2) and tapered in diameter with respect to the ball diameter.

7. Adjustable foot (1) according to one of claims 1 to 6, **characterised in that** a locking opening (22) is formed on the side of the bearing plate (10) opposite the mounting surface (11) by an annular chamfer (14) which changes like a funnel into a collar (15), the internal diameter (W) of which is smaller than the ball diameter (D).

8. Adjustable foot (1) according to one of claims 1 to 7, **characterised in that** the ball (6) and the ball receiver (16) in the adjustable foot (1) form an elastomeric plug-in locking connection.

9. Adjustable foot (1) according to one of claims 1 to 8, **characterised in that** the collar (15) forms an annular spreading surface to expand the locking opening (22) except for a diameter clipping over the equator of the ball (6).

10. Adjustable foot (1) according to one of claims 1 to 9, **characterised in that** the elastomer (20) forms an elastomeric bottom region (8) between the reinforcing disc (19) and mounting surface (11).

## Revendications

1. Pied de réglage articulé (1) comprenant une assiette support (10) formé au moins partiellement en élastomère, comprenant une surface d'installation (11) à poser sur une surface d'appui, ainsi qu'un logement sphérique (16) ouvert unilatéralement pour une sphère (6) qui est montée à l'extrémité d'une tige (2), le logement sphérique (16) étant limité au-dessous de la sphère (6) par un disque de renforcement (19), **caractérisé en ce que** le disque de renforcement (19) est intégré dans l'élastomère (20) et présente un trou central (17) dans lequel s'appuie le côté inférieur (7) de la sphère (6).

2. Pied de réglage (1) selon la revendication 1, **caractérisé en ce que** la sphère (6) est montée pivotante dans le trou (17).

3. Pied de réglage (1) selon la revendication 1 ou 2, **caractérisé en ce que** la zone circonférentielle du trou (17) dans le disque de renforcement (16) s'applique par complémentarité de forme contre le diamètre de sphère s'engageant à cet endroit.

4. Pied de réglage (1) selon l'une des revendications 1 à 3, **caractérisé en ce que** le disque de renforcement (19) est en métal.

5. Pied de réglage (1) selon l'une des revendications 1 à 4, **caractérisé en ce que** le disque de renforcement (19) est lié par vulcanisation à l'élastomère (20).

6. Pied de réglage (1) selon l'une des revendications 1 à 5, **caractérisé en ce que** la sphère (6) est liée par unité de matière à un collet (5) dépassant de la tige (2) et à diamètre décroissant par rapport au diamètre de sphère.

7. Pied de réglage (1) selon l'une des revendications 1 à 6, **caractérisé en ce qu'**une ouverture de verrouillage (22) est formée sur le côté de l'assiette support (10) opposé à la surface d'installation (11) par un chanfrein périphérique (14) qui se transforme en forme d'entonnoir en une collerette (15) dont la largeur intérieure (W) est inférieure au diamètre de sphère (D).

8. Pied de réglage (1) selon l'une des revendications 1 à 7, **caractérisé en ce que** la sphère (6) et le logement sphérique (16) dans le pied de réglage (1) forment une liaison de verrouillage par emboîtement élastomère.

9. Pied de réglage (1) selon l'une des revendications 1 à 8, **caractérisé en ce que** la collerette (15) forme une surface d'écartement périphérique pour élargir l'ouverture de verrouillage (22) jusqu'à un diamètre s'enclenchant par ressort sur l'équateur de la sphère (6).

10. Pied de réglage (1) selon l'une des revendications 1 à 9, **caractérisé en ce qu'**entre de disque de renforcement (19) et la surface d'installation (11), l'élastomère (20) forme une zone de base élastomère (8).
